# EUROPEAN PATENT SPECIFICATION

(11) **EP 0 570 958 B1**
(45) Date of publication and mention of the grant of the patent: **30.07.1997**
(21) Application number: 93108205.1
(22) Date of filing: 19.05.1993
(51) Int. Cl.: H04N 1/00, H04N 1/028

(54) **A reflective and transmissive original pickup apparatus and a method of reading the original**
Bildaufnahmevorrichtung für reflektierende und transparente Vorlagen und Verfahren zum Lesen dieser Vorlagen
Dispositif de prise-de-vue des originaux reflechissants et transparents et procédé pour lire ces originaux

(30) Priority: 20.05.1992 JP 151126/92; 16.07.1992 JP 189028/92; 25.09.1992 JP 256043/92; 26.01.1993 JP 11014/93
(43) Date of publication of application: 24.11.1993
(73) Proprietor: SHARP KABUSHIKI KAISHA, Osaka-shi, Osaka-fu 545 (JP)
(72) Inventor: Tanaka, Kenji, Uzi-shi, Kyoto-fu (JP); Gomi, Masayuki, Kyoto-shi, Kyoto-fu (JP); Nagano, Fumikazu, Yamatokoriyama-shi, Nara-ken (JP); Yamamoto, Kouichi, Yamatokoriyama-shi, Nara-ken (JP); Motowaki, Kazuyuki, Nabari-shi, Mien-ken (JP); Tsuchiya, Shinichi, Yaita-shi, Tochigi-ken (JP); Yoshizaki, Shusaku, Kita-gun, Ehime-ken (JP)
(74) Representative: Müller, Frithjof E., Dipl.-Ing.

(56) References cited:
- EP-A- 0 516 092
- DE-A- 3 935 557
- US-A- 4 734 742
- US-A- 5 113 268

## Description

### BACKGROUND OF THE INVENTION

### (1) Filed of the invention

The present invention relates to a reflective and transmissive originals pickup apparatus and a method of reading the original, and more particularly, to a reflective and transmissive original pickup apparatus and a method of reading the original, wherein image information such as characters and patterns on an original of light-reflective or light-transmissive type is converted into digital signals for every picture element or pixel, so as to transmit the digital signals into various kinds of image-processing apparatus. In addition the present invention is directed to an improved scanner for use in these apparatus, the scanner which, in particular, includes reflective/transmissive original mode discriminating means for realizing an easy selection of original mode by means of a simple switching means.

### (2) Description of the Related Art

Conventional original pickup apparatus (scanners) are generally directed to read any one of reflective original or transmissive original. Alternatively, there have been apparatus which have function capable of reading both reflective and transmissive originals. Nevertheless, such apparatus require a rather troublesome handling such as to attach and/or remove associated parts such as a pickup unit, an original pressor, etc., every time when the pickup mode is to be changed between a reflective original mode and a transmissive original mode.

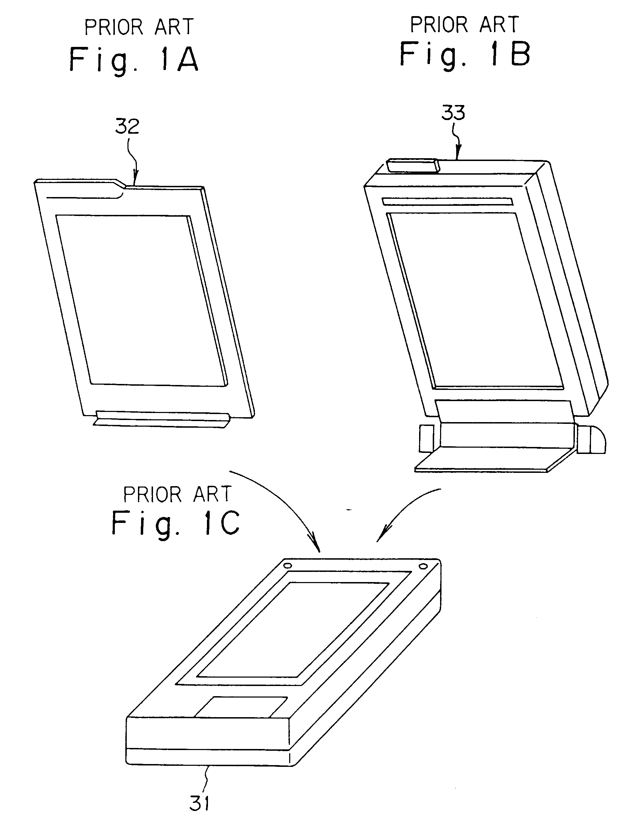

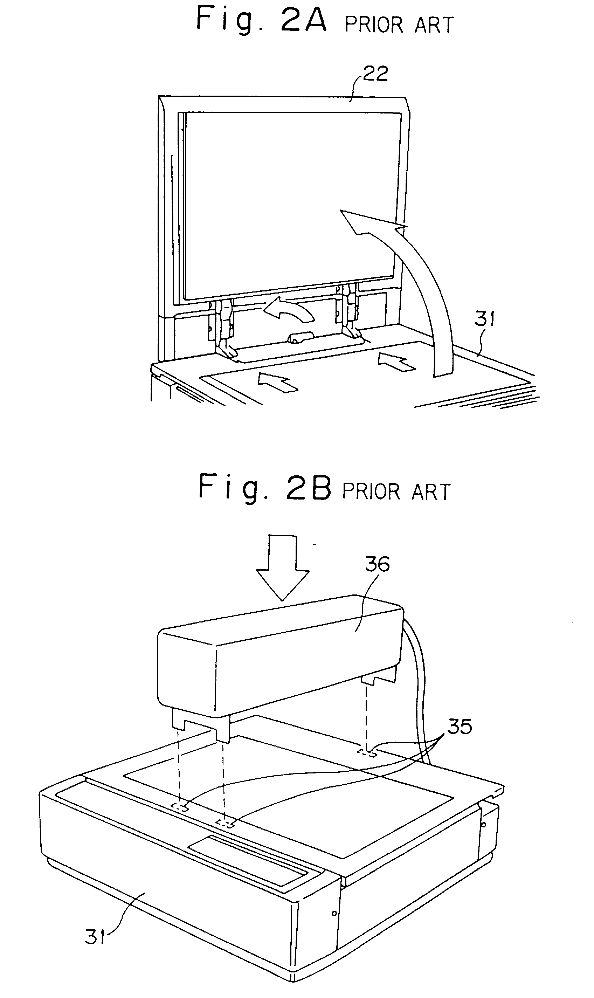

Referring to the drawings, one example of such apparatus will be described. Figs.1A to 1C are perspective views showing schematic appearance of a conventional original pickup apparatus. Figs.1A, 1B and 1C show an original pressing plate 32, a transmissive original pickup unit 33, and a scanner body 31, respectively. Figs.2A and 2B are perspective views showing manners of attachment and detachment of parts in a conventional scanner. Specifically, Fig.2A shows a manner of detaching an original cover 22 from a scanner body 31, whereas Fig.2B shows a manner of attaching a lamp unit 36 to a scanner body 31. In the figure, a reference numeral 35 designates attachment holes for lamp unit 36.

Since the handlings of attachment and detachment of these parts are considerably troublesome and complicated, the present applicant hereof has presented Japanese Patent Application Laid-Open JP-A-61 021 672 in which an optical path-changing mechanism which allows an easy selection of pickup modes between a reflection mode and a transmission mode. In this mechanism, a light source is provided only on a side in which a light receiving means is disposed while a series of mirrors are used to create a first optical path system for introducing transmitted light to the light receiving means and a second optical path system for introducing reflected light to the light receiving means. In this arrangement, there is provided a switching means which works such that, if one of the two modes is selected, the other mode is shut down. In this case, as the scanning mode is changed over, a driver means is activated to move a light-diffusing plate to advance or retract. The light-diffusing plate is shifted to insert between the light source and an original when transmission mode is selected, so that light emitted from the illuminating lamp may be scattered to create uniform light entering the transmissive original.

As described above, the conventional reflective and transmissive original pickup apparatus (scanner) as shown in Figs.1A to 1C and Figs.2A and 2B, would necessitate attaching and/or removing operation, of a reflective original presser or original cover required for reading a reflective original, or of a transmission unit or a lamp unit for transmission mode required for reading a transmissive original, and besides a switching operation, every time when the mode of reading is to be changed from a reflective original mode into a transmissive original mode, or vice versa. For these reasons, the conventional apparatus have suffered from great deterioration of the scope of use of the reading apparatus and the operativity thereof.

With regard to a mechanism proposed in Japanese Patent Application Laid-Open JP-A-61 021 672, since one of the optical path systems is selected by changing over the position of a mirror, the operation is simple, but two optical path systems are required so that the space occupied by these in the apparatus becomes great, and the structure of the apparatus could not help becoming slightly complicated.

To deal with these problems, in recent years, there has been known a system which includes a basic apparatus of a reflective original pickup unit comprising a CCD (charge-coupling device as used for a light receiving device, likewise hereinafter) for reflective original, a scanner light source and an opaque original pressing cover; and to which an optional unit including a CCD for transmissive original can be attached in place of the original pressing cover after removal thereof. In this case, if the unit for transmissive original is attached, a switch is operated to recognize the attachment of the unit, so as to change over the mode of the scanner into transmissive original mode. On the other hand, when the apparatus is used in reflective original mode, the original pressing cover must be attached after the removal of the unit for transmissive original in the order opposite to that described above.

In the above case, if the unit for transmissive original remains attached, the aforementioned switch also remains in operation. This prohibits the change into the unit for reflection original. Accordingly, when the apparatus is used in reflection original mode, it is necessary to cancel the switch by removing the unit for transmissive original, or by any other way, whatever it may.

However, practical use of scanning would often demand on repeated changes of the mode between reflective and transmissive original modes. In such cases, the attachment and detachment of the unit and the original presser give rise to considerable intricacy. Accordingly, simplification of its handling has been earnestly desired.

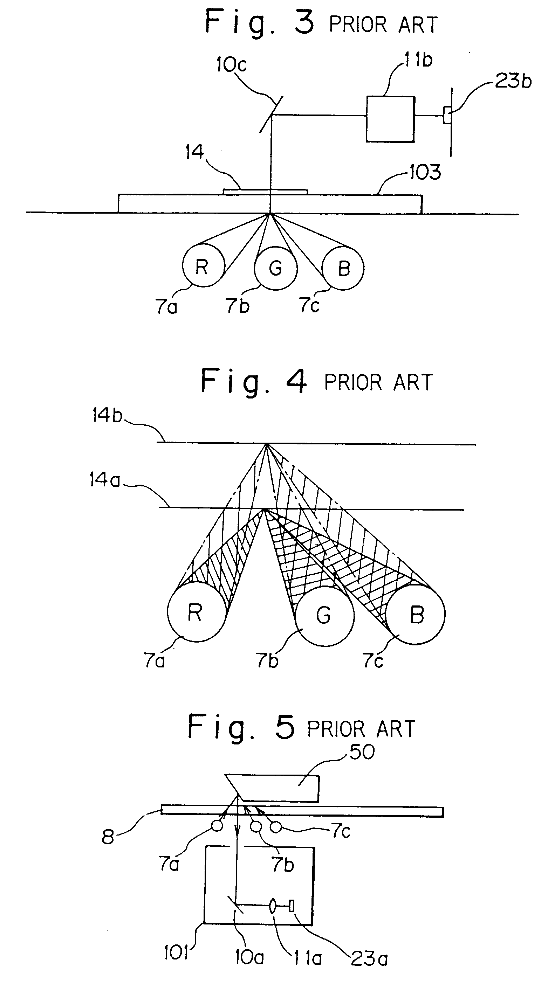

Now, with regard to scanning of color originals, the aforementioned Japanese Patent Application Laid-Open JP-A-61 021 672 teaches a method. That is, when a color original is scanned, a plurality of light sources such as a red (R) light source 7a, a blue (B) light source 7b and a green (G) light source 7c, etc. are required. In this case, because the incident angles of different colored light beams are different from one another, when a transmissive original is to be read, a diffusing plate 103 is required to scatter the light beams in order to measure against the difference of the beams in their incident directions. More specifically, in accordance with the technology proposed in the publication, light beams emitted from light sources 7a to 7c are scattered by diffusing plate 103 to irradiate an original 14, whereby the transmitted light from the original is passed through a reflection mirror 10c and a lens llb to be picked by light receiving element 23b of a CCD, as shown in Fig.3.

In the pickup of color originals, one method of color-separation of light into R, G and B components can be effected using a different filters. Specifically, Japanese Patent Publication JP-A-62 062 101 discloses a method in which the reflected light from a color original is passed through filters to pick up information having particular wave length ranges, whereby the color original is separated in color. However, in the color-separation method by means of filters, because different color light beams such as of R, G and B irradiate the original in different directions, light-intensity among the different color light beams will become unbalanced, particularly when portion of the original comes up (shown by 14b) away from a reference surface 14a, so that the reproduction of color may be degraded (particularly, a shadowy portion is subject to be colored by separated color light).

Moreover, when, as shown in Fig.5, for example, a three-dimensional, gray-colored (achromatic) solid body as an object 50 is scanned in a color scanner for reading reflective originals in which the conventional three light sources of R, G and B are employed, light emitted from red light source 7a is partially reflected on the object to be incident on CCD 23a while the reflection of light emitted from green light source 7b and blue light source 7c does not go into CCD 23a. As a result, despite that object 50 itself is gray, the object might be picked up as a red image. Generally speaking, shadowy portion is easy to be colored.

Here, in Fig.5, reference numerals 8, and 101 respectively designate a contact glass and an optical unit including a mirror 10a and a lens 11a.

### SUMMARY OF THE INVENTION

The present invention has been achieved under consideration of the problems of the prior art means described above, and it is therefore a main object of the present invention to provide a reflective and transmissive original pickup apparatus which is handled in a simple manner and improved in its configuration as compared with prior art apparatus as well as to provide a method of reading originals.

Particularly, with regard to the apparatus, it is an object of the present invention to provide a scanner including a reflective/transmissive original mode discriminating means which allows automatic switching of the pickup modes while a transmissive original unit remains attached to the scanner, by discriminating the presence or absence of an original presser without necessity of effecting troublesome attachment and detachment of the units.

It is another object of the present invention to provide an original pickup light source unit which allows reading of both reflective and transmissive color originals, without necessity of a diffusing plate.

It is still another object of the invention to provide a reflective original pickup light source unit which can improve color reproduction performance for an achromatic solid object or a reflective original even when portions of the original rise or come up.

The above objects are achieved by the apparatus and the method defined in independent claims 1 and 6. Further advantageous embodiments are specified in the dependent claims.

The claimed apparatus has a transmissive original pickup unit disposed above a scanner body of the original pickup apparatus while a blocking member or a diffusing plate may be attached and detached in correspondence with transmissive and reflective modes, and further the apparatus includes detecting means for detecting the presence of the member. Therefore, it is possible to perform scanning corresponding to mode change only with simple operation.

For example, the scanner light source and the CCD sensor for use in transmissive mode are utilized as a means for determining the switching between the reflective original unit and transmissive original unit. In this case, when the original pressing sheet is attached, light emitted from the scanner light source is blocked out and cannot reach the CCD sensor for transmissive mode, therefore, the transmissive original mode is disabled while the reflective original mode becomes valid. On the other hand, unless the original pressing sheet is attached, the situation becomes opposite. Thus, it is possible for the apparatus to change over between both the modes simply by inserting or retracting the original pressing sheet, without necessity of providing an individual sensor for detecting the presence of the original pressing sheet, or without necessity of attaching or detaching an optional transmissive original unit.

Besides, the apparatus is made to have a lamp for transmissive originals and a blocking member that can be stretched out and wound up, both disposed above the scanner, so that it is possible to utilize the optical system incorporated in the scanner body to effect scanning in transmission mode. Accordingly, parts can be markedly reduced in number.

Moreover, when, with no blocking member, a diffusing plate is inserted into between the transmissive original pickup unit and the scanner body, it is possible to automatically change over the mode between transmissive mode and reflective mode based on examination of the presence of the diffusing plate.

In the structures in accordance with the claims, light emitted from a light source is color-separated by, for example, a dichroic mirror to create desired color light and then the desired color light is transmitted and reflected through a dielectric beam splitter, so that the reflected light is irradiated on a reflective original while the transmitted light is irradiated on a transmitted original. Accordingly, it is possible to read both reflective and transmissive originals without necessity of a diffusing plate.

Here, in the present invention, when a plurality of dichroic mirrors are provided to create a plurality of light beams each having a desired color, and the light beams having a desired colors obtained from respective dichroic mirrors are aligned in a direction to irradiate a reflective original; it is possible to improve color reproduction performance for an original even having unevenness or swell.

Besides, in the present invention, illuminating light is color-separated by a plurality of dichroic mirrors to create a plurality of desired color light beams, the light beams having desired colors obtained from respective dichroic mirrors are aligned in a direction to irradiate a reflective original. Accordingly, the beams having desired colors can be irradiated on the reflective color original with all the irradiating angle of beams being coincident, so that it is possible to improve color reproduction performance for an original even having unevenness or swell.

### BRIEF DESCRIPTION OF THE DRAWINGS

Fig.1A is a perspective view showing an original pressing plate of a prior art--original pickup apparatus;
Fig.1B is a perspective view showing a transmissive original pickup unit of a prior art original pickup apparatus;
Fig.1C is a perspective view showing a scanner body of a prior art original pickup apparatus;
Fig.2A is a perspective view illustrating a manner of detaching an original cover from a prior art scanner body;
Fig.2B is a perspective view illustrating a manner of attaching a lamp unit to a prior art scanner body;
Fig.3 is a structural illustration schematically showing a transmissive color original pickup means of a prior art;
Fig.4 is a schematic illustration for explaining imbalance of light intensity among light beams having different colors in the means shown in Fig.3 when an original has unevenness;
Fig.5 is an illustration showing an arrangement of prior art means in which an achromatic solid object is subjected to pickup operation using three light sources;
Fig.6A is a perspective view showing an original pickup apparatus for reflective and transmissive type originals with a transmissive original pickup unit being closed, in accordance with the invention;
Fig.6B is a perspective view showing an appearance of an original pickup apparatus for reflective and transmissive type originals in accordance with the invention;
Fig.6C is a perspective view showing an inside structure of an original pickup apparatus for reflective and transmissive type originals in accordance with the invention;
Fig.7 is a schematic diagram for explaining a switching means of scanner units in an original pickup apparatus for reflective and transmissive type originals in accordance with the invention;
Fig.8 is a schematic block diagram showing one of embodied configurations using a blocking member among original pickup apparatus for reflective and transmissive type originals in accordance with the invention;
Fig.9A is a schematic illustration showing a reflection-pickup operation in the apparatus shown in Fig.8;
Fig.9B is a schematic illustration showing a transmission-pickup operation in an apparatus shown in Fig.8;
Fig.10A is an illustration showing an embodiment of a blocking member for use in the invention;
Fig.10B is an illustration showing another embodiment of a blocking member for use in the invention;
Fig.11 is a schematic illustrative diagram showing another embodiment of an apparatus shown in Fig.8;
Fig.12A is an illustrative view showing an elemental structure of a reflective and transmissive original pickup apparatus employing a pair of lamp units according to the present invention;
Fig.12B is an illustration showing a structure of a blocking member that can be stretched out and wound up for use in a reflective and transmissive original pickup apparatus employing a pair of lamp unit according to the present invention;
Fig.12C is an illustration showing an operation of a blocking member shown in Fig.12B;
Fig.13 is a block diagram showing a controlling circuit of a scanner and its associated parts for executing a method of the present invention in which a diffusing plate is used to read reflective and transmissive originals, and explaining the operation thereof;
Fig.14 is a schematic illustration showing a basic arrangement of optical units and other components for executing a method of the present invention in which a diffusing plate is used to read reflective and transmissive originals;
Fig.15A is an illustration showing a state of optical units in an apparatus shown in Fig.14, the state, based on which the pickup mode of the apparatus is determined as to be in reflective mode;
Fig.15B is an illustration showing a state of optical units in an apparatus shown in Fig.14, the state, based on which a pickup operation in reflective mode is started;
Fig.16A is an illustration showing a state of optical units in an apparatus shown in Fig.14, the state, based on which the pickup mode of the apparatus is determined as to in transmissive mode;
Fig.16B is an illustration showing a state of optical units in an apparatus shown in Fig.14, the state based on which a pickup operation in transmissive mode is started;
Fig.17 is a flowchart for explaining the pickup method for reading reflective and transmissive originals of the present invention associated with the embodiment shown in Figs.13 to 16B;
Fig.18 is structural view showing a scanner provided with an embodiment of light source units for reading reflective and transmissive originals in accordance with the invention;
Fig.19 is a structural view showing a scanner provided with an embodiment of a light source unit for reading reflective originals in accordance with the invention;
Fig.20 is a structural view showing a scanner provided with an variational embodiment of a light source unit shown in Fig.19;
Fig.21A is a schematic illustrative view showing a structural example of a color scanner for use in a reflective original pickup apparatus of the invention;
Fig.21B is a schematic illustrative view showing a variational embodiment of a color scanner shown in Fig.21A;
Fig.22A is a schematic illustrative view showing another variational embodiment of a color scanner shown in Fig.21A;
Fig.22B is a schematic illustrative view showing a variational embodiment of a color scanner shown in Fig.22A;
Fig.23A is a schematic illustrative view showing still another variational embodiment of a color scanner shown in Fig.21A;
Fig.23B is a schematic illustrative view showing a variational embodiment of a color scanner shown in Fig.23A;
Fig.24A is a schematic illustrative view showing another variational embodiment of a color scanner shown in Fig.22A; and
Fig.24B is a schematic illustrative view showing a variational embodiment of a color scanner shown in Fig.24A;

### DESCRIPTION OF THE PREFERRED EMBODIMENTS

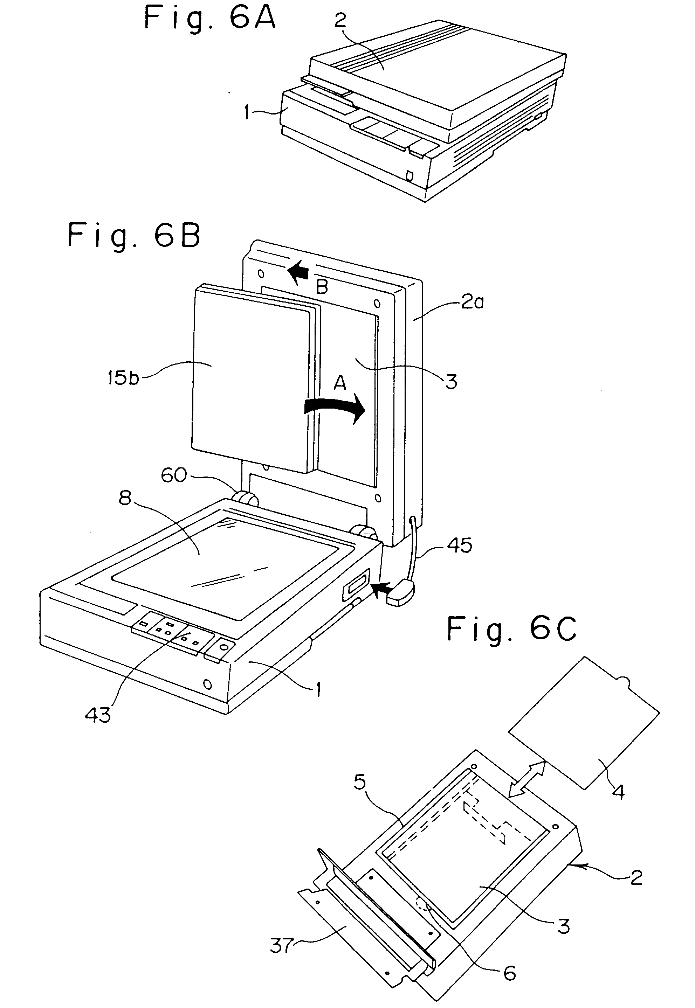

The present invention will hereinafter be described in detail with reference to the accompanying drawings. First of all, Figs.6A to 6C are perspective view showing a schematic appearance of an original pickup apparatus for reflective and transmissive type originals equipped with a blocking member in accordance with the present invention. In Fig.6A, the apparatus is shown with a transmissive original pickup unit 2 being closed. Here, a reference numeral 1 designates a main body scanner of the original pickup apparatus.

Fig.6B is a perspective view showing an appearance of a main body scanner. In Fig.6B, a reference numeral 1 indicates a scanner body, or a unit for reflective originals including a pickup means for reflective originals. A reference numeral 8 designates an original table, generally formed with glass. The unit for reflective originals, or scanner body 1 axially supports a transmissive original pickup unit 2a as to be a means for reading transmissive originals through an appropriate joint member 60 so that the unit 2a may be opened and closed, and the unit 2a is connected to the unit for reflective originals, or scanner body 1 through a cable 45 for signal transmission. An original pressing sheet 15b of an opaque material is fit to a pickup window 3 of transmissive original pickup unit 2a in such a manner that the sheet can be manually attached and detached in directions of arrows A and B. This fact that the original pressing sheet is formed with an opaque material and arranged in an attachable and detachable manner, is effective in the invention, to allow an easy change-over between reflection and transmission modes, as will be described hereinafter. In the figure, the element denoted by 43 is a control panel of scanner 1.

Fig.6C is a view showing configurations including the inside of transmissive original pickup unit 2 in a more specific manner. In the figure, a reference numeral 4 designates an external light-blocking sheet as a means for blocking member, which is attached to pickup window 3 when a reflective original is to be read. An attachment guide for the attachment is shown at 5, along which external light-blocking sheet 4 is provided movable in directions of arrows shown in the figure.

A detector 6 is disposed on a side end of the pickup window 3. The detector 6 is a means for detecting whether or not an end of external light-blocking sheet 4 reaches the position of detector 6, or the presence or absence of the blocking member and based on the result, transmitting the information, to a main controlling section in the scanner body. The provision of detector 6 allows an automatic set-up of a pickup mode between transmission and reflection modes.

An attachment angle 37 is provided as a jig for attaching transmissive original pickup unit 2 to scanner body 1 of the original pickup apparatus.

Next, configurations of respective units for reflection and transmission type originals will be explained with reference to the drawings.

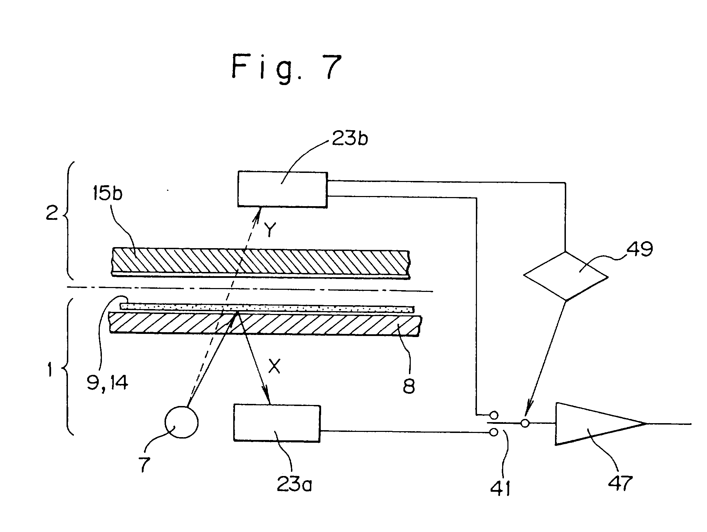

Fig.7 is a schematic diagram showing switching means between the both units in the scanner of the invention.

In Fig.7, transmissive original pickup unit 2 with original pressing sheet 15b shown in Fig.6B is illustrated above a dash and dot line, while scanner body 1 provided with original table 8 mainly for the unit of reflective original is shown below the dash and dot line.

In Fig.7, an original is designated by a numeral 9 or 14, depending its type. That is, reference numerals 9 and 14 are allotted for reflective and transmissive originals, respectively. A CCD sensor 23a for reflective original 9 and another CCD sensor 23b for transmissive original 14 are disposed respectively in opposite sides of original table 8 as shown in Fig.7. A means for discriminating connection with transmission mode (which will be expressed by transmission connection discriminating means) indicated by 49 is provided so as to allow CCD sensor 23b to automatically discriminate the presence of original pressing sheet 15b to change over a circuit change-over switch 41 when a power supply (not shown) for a light source 7 for scanner is turned on. In other word, the provision of the means 49 will afford a selection of pickup modes between transmission and reflection modes. An element shown by 47 is an image signal amplifier for processing sensor signals from CCD sensor 23a or 23b.

Now, referring to Fig.7, the operation of an embodied apparatus of the invention will be described.

When the power source for light source 7 is turned on, light source 7 will emit light. In this case, when original pressing sheet 15b is attached on the side of transmissive original pickup unit 2, the light from light source 7 will be blocked out and cannot reach CCD sensor 23b since original pressing sheet 15b is formed with an opaque material. Therefore, transmission connection discriminating means 49 determines that transmissive original pickup unit 2 is invalid, and circuit change-over switch 41 is changed over into the reflective original mode, so that light source 7 operates in reflection mode.

On the other hand, if original pressing sheet 15b is not fit, the light emitted from light source 7 is received by CCD sensor 23b, therefore transmission connection discriminating means 49 determines that transmissive original pickup unit 2 is valid in this case. Accordingly, circuit change-over switch 41 is changed over into the transmissive original mode, so that light source 7 operates in transmission mode.

Next, there will be provided description of the operation of reading an original in the invention.

As shown in Fig.7, an original 9, or 14 is put on original table 8 for picking up the information thereon. In this case, with an original 14, that is, a transmissive original, original pressing sheet 15b is detached, so that circuit change-over switch 41 is changed into the transmission mode. That is, a circuit including CCD sensor 23b for transmission mode will be formed. Therefore, light emitted from light source 7 transmits through original 14 and is received by CCD sensor 23b for transmission mode, proceeding in a light path Y shown by a broken line. Then the signal is sent through switch 41 to image signal amplifier 47 for processing. In contrast, with an original 9 or reflective original, original pressing sheet 15b is attached, so that circuit change-over switch 41 is changed into the reflection mode. That is, a circuit including CCD sensor 23a for reflection mode will be formed. Therefore, light emitted from light source 7 is reflected on original 9 and is received by CCD sensor 23a for reflection mode, proceeding in a light path X shown by a solid line. Then the signal is sent through switch 41 to image signal amplifier 47 for processing.

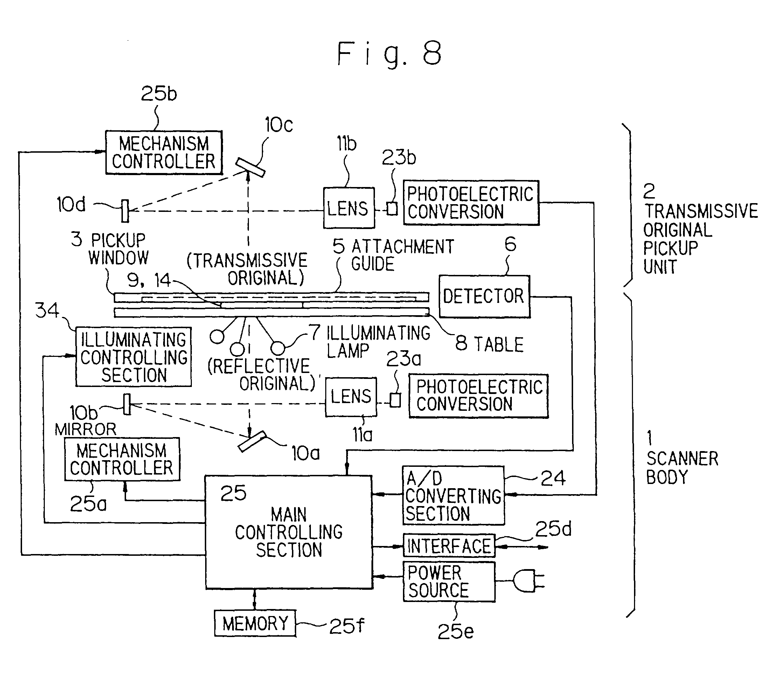

Fig.8 is an illustrative diagram schematically showing an embodiment of reflective and transmissive original pickup apparatus of the invention, in order to illustrate the case in which a blocking member is engaged. This case will be descried hereinafter.

First, in Fig.8, the upper transmissive original pickup unit 2 and the lower scanner body 1 correspond respectively to the components shown in Figs.6A to 6C described above. There are an original table 8 provided between scanner body 1 and transmissive original pickup unit 2, a pickup window 3 equipped with an attachment guide 5 shown in Fig.6C disposed on the side of the transmissive original pickup unit 2, and a detector 6 for detecting the presence or absence of external light-blocking sheet 4 shown in Fig.6C disposed on an end of pickup window 3.

In Fig.8, numerals 9 and 14 designate originals. Of these, 9 indicates a reflective original and 14 denotes a transmissive original.

In Fig.8, transmissive original pickup unit 2 and scanner body 1 include respective optical systems for performing reading operation with a common illuminating lamp 7. Specifically, transmissive original pickup unit 2 is provided, in the order of light progressing direction along a transmission optical path, with a mirror 10c, a mirror 10d, a lens 11b and a charge-coupling device (CCDb) 23b for converting the transmitted light into electric signals, respectively.

On the other hand, scanner body 1 is provided, in the order of light progressing direction along a reflection optical path, with a mirror 10a, a mirror 10b, a lens 11a and a charge-coupling device (CCDa) 23a for converting the reflected light into electric signals, respectively.

Further, mechanism controllers 25b and 25a are provided as means for controlling mechanisms of original reading operation in transmissive original pickup unit 2 side and scanner body 1 side, respectively.

As means for controlling the system totally, there is incorporated in scanner body 1 a main controlling section 25 comprised of a central processing unit (CPU) including a publicly known program memory, a timing circuit, a correction circuit, etc. The main controlling section 25 has function to give an instruction of the original type information transmitted from a detector 6 which produce the output information based on judgement whether or not there is a blocking member. With this instruction given by main controlling section 25, an illuminating controlling section 34 of illuminating lamp 7, the mechanism controllers 25a, 25b are controlled. There is provided an A/D converter 24 which executes A/D conversion of image data photoelectrically converted when the data is transmitted from CCDa 23a or CCDb 23b to main controlling section 25. There are also provided an interface 25d for processing and communicating input/output signals with the outside, a memory 25f for storing information externally, power supply 25e for supplying electric power, and other necessary components.

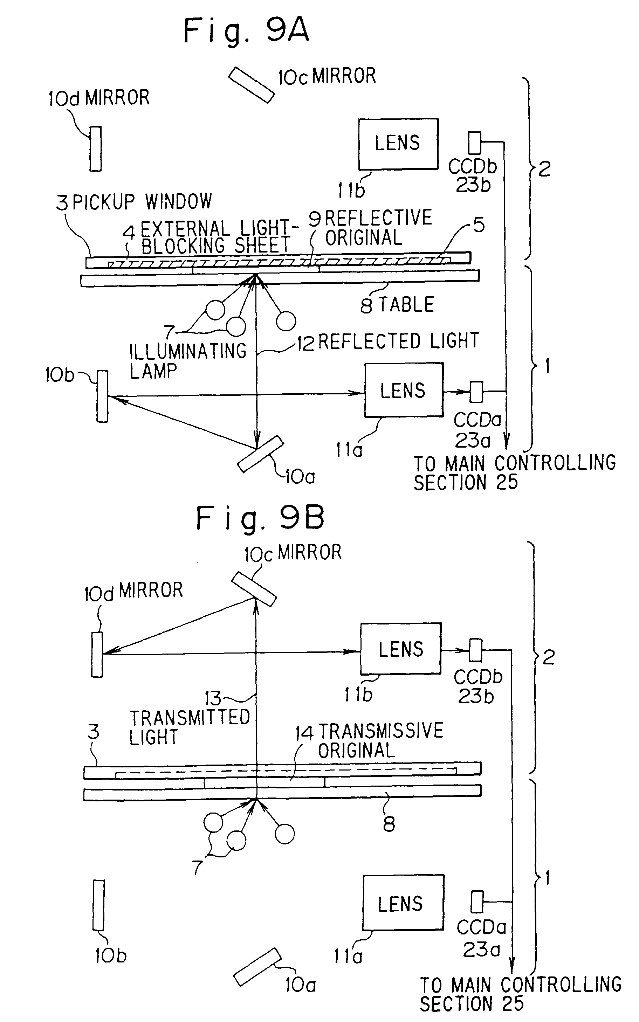

Next, with reference to schematic illustrations shown in Figs.9A and 9B, operation of reading in each mode will be described in accordance with the embodiment of the pickup apparatus configurated as shown in Fig.8.

First, Fig.9A shows a mode in which a reflective original is read in. Light emitted from illuminating lamp 7 incorporated in scanner body 1 reaches reflective original 9 put between transparent table 8 mounted on the top of scanner body 1 and external light-blocking sheet 4 attached on pickup window 3 of transmissive original pickup unit 2, and is reflected thereon. The reflected light (indicated by 12) including character and/or image information of the original is directed into scanner body 1, and proceeds successively from reflective original 9 through mirror 10a, mirror 10b and lens 11a to CCDa 23a (charge-coupling device) as shown by arrows in the figure. The light thus arrived is converted photoelectrically at CCDa 23a into electric signals, to be transferred to A/D converter 24 as shown in Fig.8.

On the other hand, Fig.9B shows a mode in which a transmissive original is read in. In the case, external light-blocking sheet 4 has been removed, and light emitted from illuminating lamp 7 incorporated in scanner body 1 illuminates transmissive original 14 put between transparent table 8 mounted on the top of scanner body 1 and pickup window 3 of transmissive original pickup unit 2, and passes through the original to acquire character and/or image information of the original. The transmitted light (indicated by 13) containing character and/or image information of the original is directed into transmissive original pickup unit 2, and proceeds successively from transmissive original 14 through mirror 10c, mirror 10d and lens 11b to CCDb 23b as shown by arrows. The light thus arrived is converted into electric signals at CCDb 23b, to be transferred to A/D converter 24. Here, illustrative description of detector 6 will be omitted as it has been described heretofore.

As described above, according to the invention, in place of an original cover, a transmission unit, or an original pressing plate used in the prior art, the apparatus is equipped with a transmissive original pickup unit 2 and an external light-blocking sheet 4 attachable and detachable for pickup window 3 of the unit 2, as well as detecting means including a detector 6 for detecting whether external light-blocking sheet 4 is inserted in the unit 2 or not. Accordingly, there will be no need for attachment or detachment of an original pressing plate, an original cover or a transmissive original unit which would be required to exchange in the prior art every time when the type of originals used is changed. In addition, since reading modes corresponding to transmissive and reflective originals can automatically be set up, the operativity of the pickup apparatus is improved and becomes easy to handle.

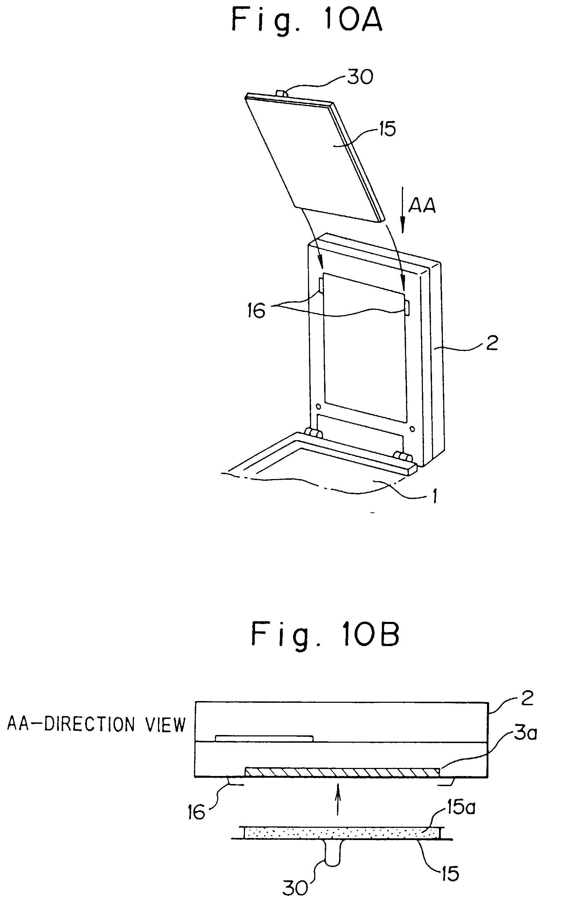

Further, in using the thus arranged apparatus of the present invention, it is possible to use as a blocking member a light blocking mat (OC mat) formed with a material such as a sponge, in place of the aforementioned external light-blocking sheet 4. Figs.10A and 10B are illustrative views showing an embodiment using such mat, and Figs.10A and 10B are perspective view thereof and a side view of Fig.10A observed in a direction of arrow AA.

The perspective view, or Fig.10A shows a state in which a light blocking OC mat 15 is fit into OC mat attachment guide 16 while the transmissive original pickup unit 2 is opened from scanner body 1. As shown in the AA-direction view of Fig.10B, OC mat 15 has a sponge 15a applied thereto on its side in contact with a glass surface 3a of transmissive original pickup unit 2, and is provided with a detachment knob 30 to allow an easy detachment.

Here, with regard to the blocking member, the previously described external light-blocking sheet 4 and the above-described OC mat 15 have been referred to only for exemplary purpose, therefore any material can be used as long as it presents the equivalent effect.

It is possible to automatically change over the reading mode, without using the detector 6, but by using an original pressing mat as a blocking member, for example, and judging attachment or detachment of the original pressing mat with the help of an illumination reset switch of illuminating lamp 7 to turn on illuminating lamp 7.

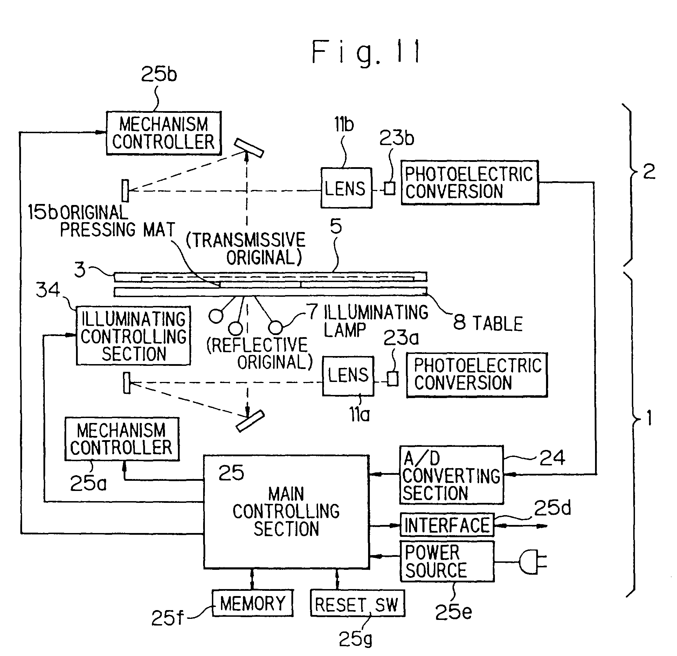

More specifically, Fig.11 is a schematic illustrative diagram showing an embodied configuration of a reflective and transmissive original pickup apparatus of the invention, in which an original pressing mat 15b and a reset switch 25g is employed. In this embodiment, configurations and operations are nearly identical with those of the embodiment of Figs.8, 9A and 9B, except in that a reset switch 25g is connected to a main controlling section 25 in place of detector 6 shown in the embodiment of Figs.8, 9A and 9B.

In this arrangement, when a reset switch 25g disposed on a key control panel (not shown) of the pickup apparatus is pressed, illuminating lamp 7 is turned on. At this time, the presence or absence of original pressing mat 15b attached in transmissive original pickup unit 2 determines transmission of signal from CCDb (charge-coupling device) 23b to main controlling section 25. More explicitly, in the case, if no signal is transmitted from CCDb 23b to main controlling section 25, light emitted from illuminating lamp 7 is blocked by original pressing mat 15b, or judged as not to be in the transmission mode. Therefore, the system is automatically changed over into the reflection mode, and signals from CCDa 23a are transmitted to main controlling section 25. In contrast, if there is no original pressing mat 15b, light emitted from illuminating lamp 7 directly passes into the inside of transmissive original pickup unit 2, so that a signal informing that the system is in transmission mode is transmitted from CCDb 23b to main controlling section 25. Thus, the switching of reading modes between for reflective originals and transmissive originals can be carried out automatically.

In the above-stated embodiment shown in Figs.8, 9A and 9B, or Fig.11, the system is configurated to perform reading operation in such a manner that, using a common illuminating lamp 7, a pair of arrangements each comprised of an optical system, a photoelectric converting means and a mechanism controlling means are provided symmetrically for respective sides of transmissive original pickup unit 2 and scanner body 1. But it is possible to construct a total system to serve for reading in both modes, not using a pair of units each including the optical system and other components as stated above, but by providing a pair of light source lamps for reflection and transmission modes only with a single unit having an optical system and other components incorporated in scanner body 1.

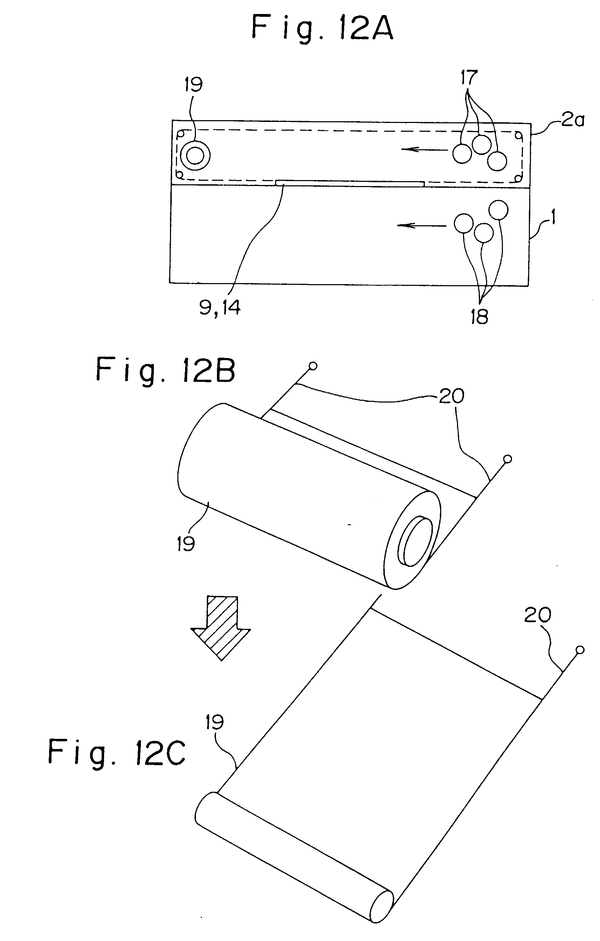

Specifically, Figs.12A to 12C are schematic illustrations showing an embodiment of reflective and transmissive original pickup apparatus of the present invention using two lamp units, and Fig.12A is an illustration showing elemental components thereof, whereas Figs.12B and 12C are perspective views showing a structure of a blocking member that can be stretched and wound up for use in the apparatus shown in Fig.12A.

First, referring to Fig.12A, the structure of the member will be described. Reference numeral 2a denotes a unit for transmission mode, including mainly a lamp 17 for transmission mode and a blocking member of a white paper sheet 19 for reflection that can be stretched and wound up. A scanner body 1 is provided with an illuminating lamp 18 for reflection mode, as well as with an optical system, a photoelectrically converting means, a mechanism controlling means, etc., similar to those in the above-described scanner body shown in Figs.8, 9A and 9B, or Fig.11. Besides, the scanner body 1 is provided with a main controlling section and its other supplemental components. The configurations and way of operation are nearly equivalent to those already described, so that no particular description will be repeated herein. Numerals 9 and 14 designate originals, and as stated above, 9 designates a reflective original and 14 denotes a transmissive original. These originals 9 are 14 are inserted between transmissive original pickup unit 2a and scanner body 1 to be read.

Referring now to Figs.12A, 12B and 12C, operation of the thus constructed pickup apparatus will be described. At first, for the case in which the apparatus is operated in a transmissive original mode, in using a transmissive original 14, the apparatus is operated as shown in Fig.12B, or with white paper sheet 19 for reflection wound up, and light source lamp 17 for transmission mode turned on. It should be noted that reflective white paper sheet 19 is provided with stretching means such as pulling strings 20, which is used in the reflection mode that will be described later.

In this case, light emitted from illuminating lamp 17 for transmission mode passes through original 14 with no blocking member of white paper 19, so that reading operation is carried out by the optical system with other components on the side of scanner body 1 while illuminating lamp 17 for transmission mode is being moved.

On the other hand, for the case in which the apparatus is operated in a reflective original mode, in using a reflective original 9, the apparatus is operated as shown in Fig.12C with white paper sheet 19 for reflection being stretched out, and illuminating lamp 18 for reflection mode being moved while turned on. In this case, the white paper sheet 19 can be stretched out as a blocking member on the backside of original 9 or on the side of unit for transmission mode 2a, by drawing pulling strings 20. With this arrangement, reading operation is then carried out, for example, by an operation similar to the reading operation executed in the reflection mode.

In the above case, although a reflective white paper sheet 19 that can be stretched and wound up is employed as a blocking member, any material other than white paper, such as a strip-like fabric fine in texture, may be used as long as it has light-blocking ability and reflective characteristic.

In a conventional apparatus, for example, shown in Figs.2A and 2B in which original cover 22 and lamp unit 36 are provided as separated parts, the original cover 22 for reflection mode and the lamp unit 36 for transmission mode should be attached to or detached from the main body every time the original mode is to be switched. But the above-described structure shown in Figs.12A, 12B and 12C can all at once eliminate such troublesome handling. In a word, the structure shown in Figs.12A, 12B and 12C can be considered that the conventional original cover 22 would incorporate the lamp unit 36 for transmission mode, and also be provided with a blocking member that may be used in the reflection mode. Therefore, parts can be reduced in number and handling can simplified. In addition, the lamp 17 for transmission mode does not require as a great current for light intensity adjustment as the lamp unit 36 in the conventional apparatus does, therefore energy saving can also be expected.

Any of the embodiments exemplarily described above uses a blocking member together with a detector or by making use of an on-and-off operation of an illuminating lamp, to thereby automatically achieve switching between reflection mode and transmission mode. Next, an embodiment of the invention will be described with reference to the drawings which uses, in place of a blocking member, a diffusing plate for scattering transmission light to make uniformly defused light.

This embodiment comprises, as will be referred to, two optical units for reflection and transmission modes. In this respect, the embodiment is similar to the first embodiment described above, but differs from the first embodiment in use of a diffusing plate for changing reading modes.

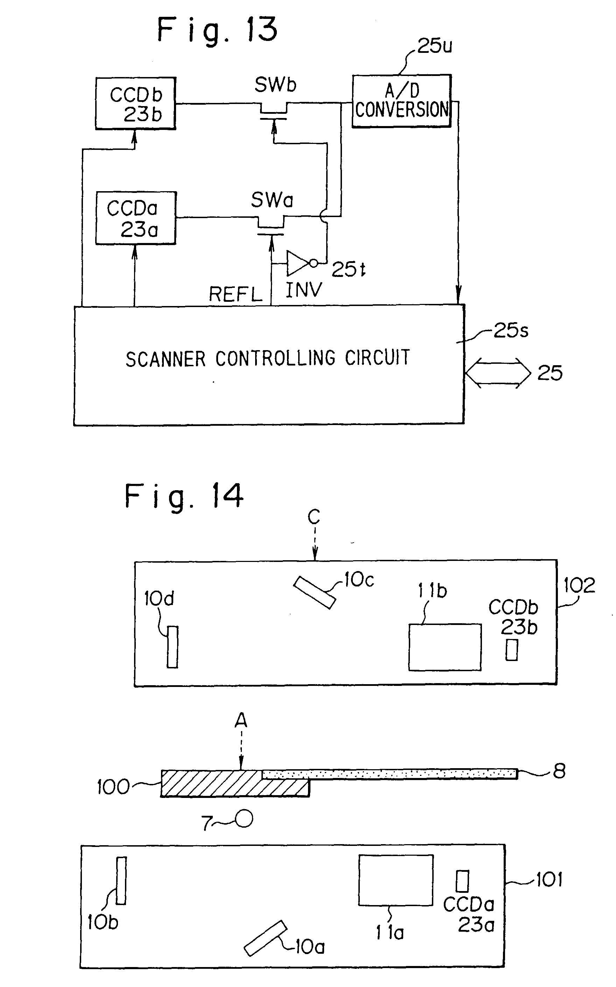

Specifically, Fig.13 is a block diagram for explaining a controlling circuit and the operation thereof, of a scanner and its associated parts used in the embodiment. As shown in Fig.13, a photoelectrically converting means CCDa 23a (for reflection mode) and CCDb 23b (for transmission mode) are both connected to an A/D converting section 25u through respective switches SWa and SWb. The A/D converting section 25u in turn is connected to a scanner controlling circuit 25s to transmit the data to a main controlling section 25. On the other hand, scanner controlling circuit 25s is provided with a means for generating a signal "REFL". The "REFL" indicates "reflection", and if REFL = "1", it represents a reflection mode whereas if REFL = "0", it represents a transmission mode. In practice, when a diffusing plate as will be referred to is absent, REFL = "1" holds, and if there is a diffusing plate, REFL = "0" holds.

The REFL port is connected to a gate of switch SWa as well as to a gate of switch SWb via an invertor (NOT circuit) 25t.

As constructed above, if scanner controlling circuit 25s launches a signal REFL="1", for example, switch SWa is turned on, and the gate of switch SWb receives a signal through invertor 25t that indicates no attachment of a diffusing plate and consequently switch SWb will be turned off. Therefore, in this case, the output of CCDa 23a, or more specifically, the output of the CCD sensor for reflection pickup mode, is inputted into A/D converting section 25u, so that the data is sent to main controlling section 25.

In contrast, if scanner controlling circuit 25s launches a signal REFL="0", switch SWa is turned off, and the gate of switch SWb receives a signal through invertor 25t that indicates attachment of a diffusing plate and consequently, switch SWb will be turned on. Therefore, in this case, the output of CCDb 23b, or more specifically, the output of the CCD sensor for transmission pickup mode, is inputted into A/D converting section 25u, so that the data is sent to main controlling section 25.

Next, a reading method of reflective and transmissive originals using the means described above will be described in a specific manner with reference to the drawings.

Fig.14 is a schematic illustrative view showing basic arrangement of optical units and other components used in the above means.

In Fig.14, reference numerals 101 and 102 designate an optical unit for reflection mode and another optical unit for transmission mode, respectively. These optical units are basically the same with those optical units for scanner body 1 and transmissive original pickup unit 2 shown in Fig.8, Figs.9A and 9B, and Fig.11. Therefore, identical reference numerals are allotted to identical parts. Reference numerals 7 and 8 designate an illuminating lamp and a table (made from glass), respectively, to which like numerals are allotted as before. On the other hand, numeral 100 denotes a portion of a cabinet body of the pickup apparatus into which table 8 of glass is fit.

A point A indicates a home position for illuminating lamp 7, that is, the position in which the lamp 7 occupies before the pickup scanning starts. A point C indicates also a home position before operation for a mirror 10c of optical unit 102 as will be detailed later.

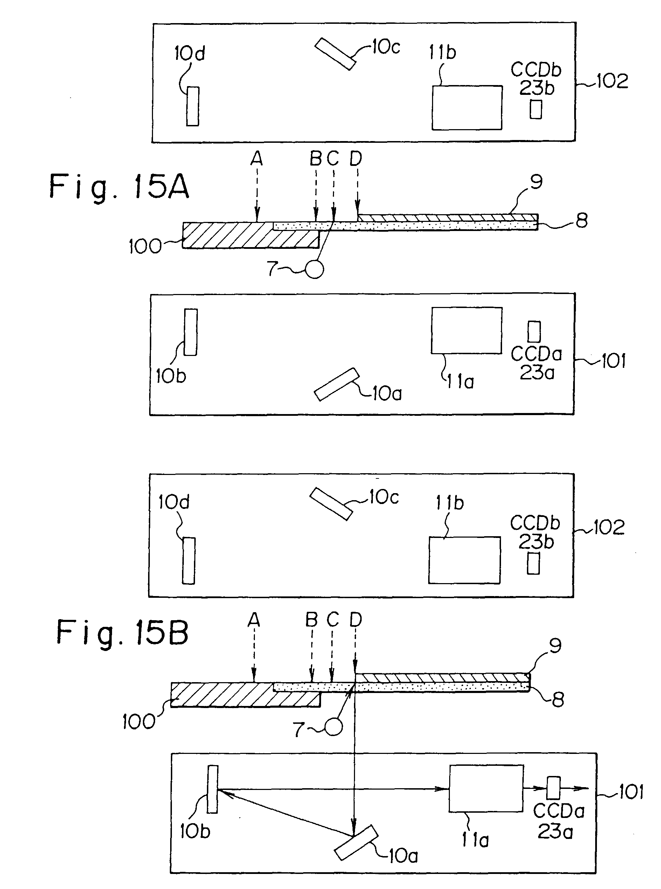

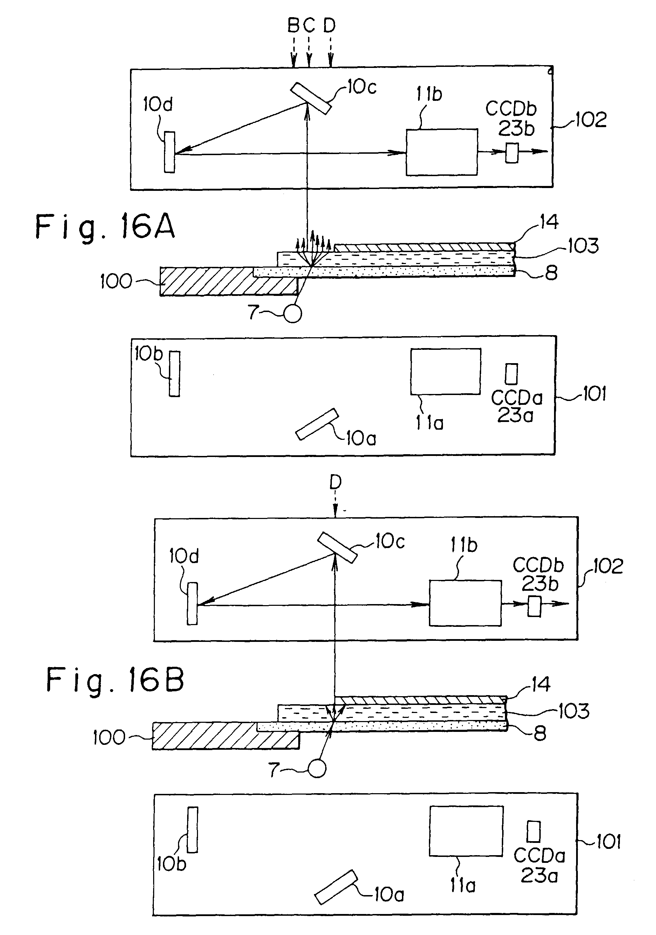

Next, the operation of reading an original by means of the apparatus shown in Fig.14 will be described with reference to the operation of an optical unit for reflection mode shown in Figs.15A and 15B and the operation of an optical unit for transmission mode shown in Figs.16A and 16B. In the figures, reference numerals 9, 14 and 103 designate a reflective original, a transmissive original and a diffusing plate.

In the beginning, explanation will be made on the meanings of points A, B, C and D shown in these figures.

At first, the point A indicates, as stated above, a home position for illuminating lamp 7 before the scanning for reading starts (or at an initial state).

Next, the point B is a position of illuminating lamp 7 when a decision is made on whether the pickup operation is effected in the reflection mode or transmission mode.

The point C indicates, as stated before, a home position of a mirror 10c of optical unit 102 at the initial state, and also a position of mirror 10c when whether the reflective or transmissive reading is determined.

Further, the point D indicates a position from which reading operation in reflection or transmission mode is started.

In this case, it should be noted that illuminating lamp 7 moves together with optical unit 101.

Then, if a main controlling section 25 (not shown) issues an order to start scanning operation, illuminating lamp 7 is turned on and the signal REFL that is generated by the scanner controlling circuit is set in the beginning equal to zero, which indicates that reading operation is set up in transmission mode, and CCDb 23b for transmission mode is selected as photoelectric converting means.

Subsequently, as shown in Figs.15A and 16A, illuminating lamp 7 is moved together with optical unit 101 to reach the point B.

Here, in the reflection mode in Fig.15A, no diffusing plate is engaged, light emitted from illuminating lamp 7 does not reach CCDb 23b, the photoelectrically converting means. Nevertheless, in a case of Fig.16A where the system is in transmission mode, a diffusing plate 103 is attached, the scattering effect due to the diffusing plate 103 allows light from illuminating lamp 7 to enter mirror 10c present at point C to reach CCDb 23b.

Therefore, even if no information is obtained on whether the apparatus is in transmission mode or reflection mode, the apparatus having the structure described above is set up in the transmission pickup mode as a first step to start the movement of illuminating lamp 7. Then, presence of the output from photoelectrically converting means CCDb 23b in optical unit 102 for transmission pickup mode is checked by taking advantage of the above-stated effect when mirror 10c of optical unit 102 is positioned at point C. In this examination, the apparatus is judged as in:
transmission mode when an output from CCDb 23b is caught;
reflection mode when no output from CCDb 23b is caught. Then, information to be obtained in the reading and scanning operation after the point may be transmitted to main controlling section 25 for processing.

Thus, if the apparatus would have been determined, for example, in transmission mode, then optical unit 101, illuminating lamp 7 and optical unit 102 would advance at the same speed to point D, the starting point of reading operation as shown in Fig.16B, and thereafter, scanning of transmissive original 14 is effected, so that the obtained information is sent to main controlling section 25 through CCDb 23b.

In contrast, when diffusing plate 103 is not attached, light emitted from illuminating lamp 7 positioned at point B can never reach mirror 10c of optical unit 102 present at point C, therefore, no output from CCDb 23b is observed and the apparatus is determined as to be in reflection mode. As a result, the signal REFL generated from the scanner controlling circuit is changed to be 1 (REFL = "1"). Then, as shown in Fig.15B, reflective original 9 is scanned, and the thus obtained information is transmitted as an output from CCDa 23a to main controlling section 25 via A/D converting section 25u. Here, it should be noted that in this case optical unit 102 stops at point C, and will not move thereafter.

Next, the procedures to execute the reading method described above will be summarized as follows.

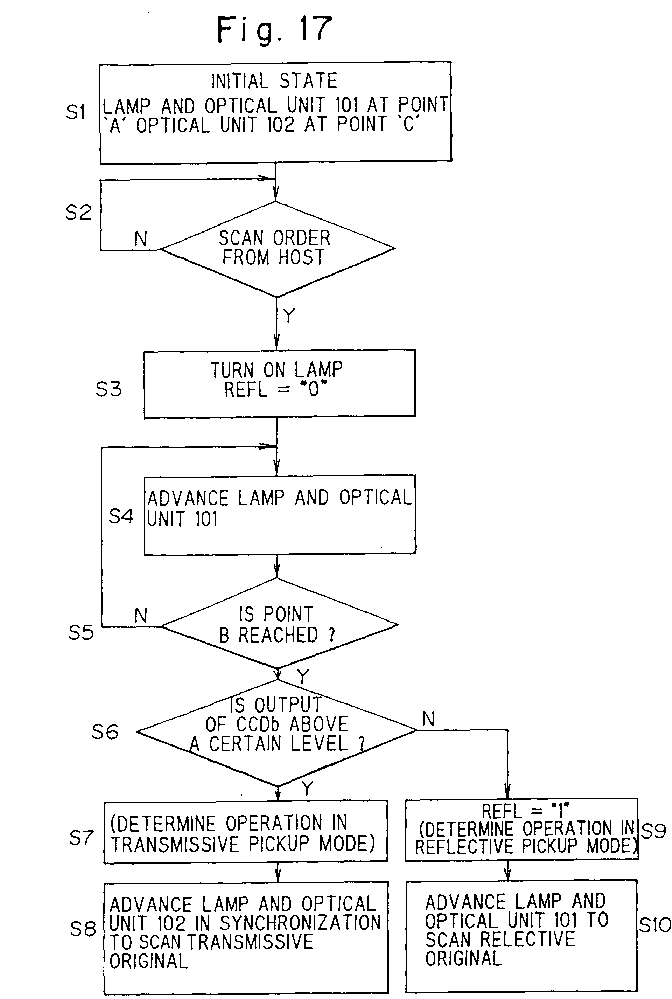

Fig.17 is a flowchart for explaining the reading method of the present invention associated with the embodiment shown in Figs.13 to 16B. In Fig.17, the reference numerals and the like used in the flowchart are referred to those used in Figs.13 to Fig.16B.

At first, a Step 1 (S1) indicates an initial state, in which illuminating lamp 7 and optical unit 101 are positioned at point A, whereas optical unit 102 is positioned at point C (see Fig.14).

Then, at a Step 2 (S2), a judgement is made on whether or not a scanning order is issued from main controlling section (host) 25, if it is negative (NO), the operation returns to the origin, but if it is affirmative (YES), illuminating lamp 7 will be turned on at a Step 3 (S3). In this case, in accordance with the method of the embodiment, the signal REFL from scanner controlling circuit 25s is set to be zero (REFL = "0"), that is, the operation will be started in transmission reading mode.

Next, illuminating lamp 7 as well as optical unit 101 are made to advance at a Step 4 (S4), which is followed by a Step 5 (S5) in which a judgement of whether illuminating lamp 7 reaches point B (YES) or not (NO) is to be made.

In the case, if the lamp 7 has not reached point B, the operation returns to Step 4 (S4) whereas if the lamp 7 has reached point B, the operation goes to a Step 6 (S6) in which a judgement is made of whether (YES) or not (NO) an output equal or greater than a certain level is generated in photoelectrically converting means CCDb 23b of optical unit 102 for transmission pickup mode. In this case, unless diffusing plate 103 is attached, no light could reach CCDb 23b, so that no output occurs (NO). Accordingly, the apparatus is determined as to be in reflection mode (see Fig.15A). On the other hand if diffusing plate 103 is attached, light reaches CCDb 23b to generate an output (YES), so that the apparatus is determined as to be in transmission mode (see Fig.16A).

If the judgment at Step 6 (S6) is affirmative (YES), the operation goes to a Step 7 (S7) in which the apparatus is determined as to operate in transmission reading mode. Then, as shown at a Step 8 (S8), illuminating lamp 7 is made to advance in synchronization with optical unit 102, to scan a transmissive original 14 (see Fig.16B).

On the other hand, when the judgment at Step 6 (S6) is negative (NO), the operation goes to a Step 9 (S9) in which scanner controlling circuit 25s causes the signal REFL to change to "1", or the apparatus is determined as to operate in reflection reading mode. Then, as shown at a Step 10 (S10), illuminating lamp 7 and optical unit 101 are made to advance, to scan a reflective original 9 (see Fig.15B).

As has been detailed heretofore, there is provided inside a transmissive original pickup unit a blocking member or diffusing plate which can be detached, together with a detecting means for detecting presence or absence of the blocking member or diffusing plate attached. Therefore, there will be no need for, attachment or detachment of an original cover or an original pressing plate, or switching operation of pickup mode between reflective and transmissive originals which all would be required to perform in the prior art depending upon the type of the original used. Accordingly, the operativity of the pickup apparatus is markedly improved.

In accordance with one aspect of the invention, as an original cover and a lamp unit are integrated while a transmission mode lamp is provided thereinside, not only the operativity can be improved similarly as stated above, but also consumption of electric energy can be saved.

Next, with reference to the drawings, description will be made on an optical unit for use in a reflective and transmissive original pickup apparatus of the invention.

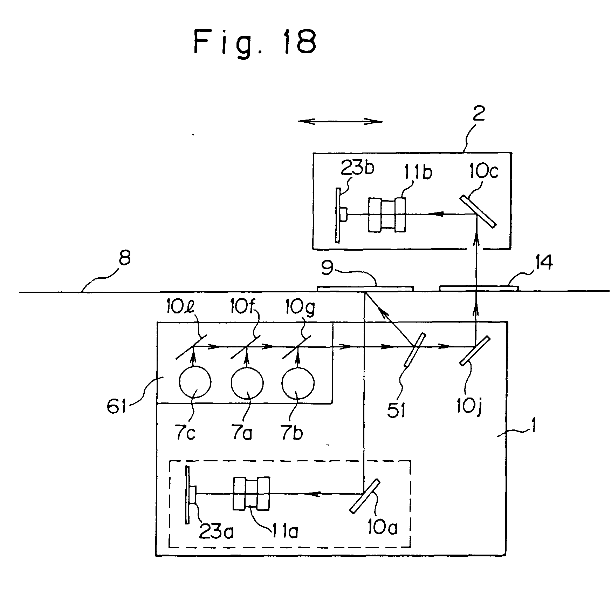

Fig.18 shows one example of those, that is, a pickup apparatus provided with an embodiment of light source units for reading reflective and transmissive originals in accordance with the invention.

In this figure, the pickup apparatus comprises a light source unit 61, scanner body 1 and a unit 2 for transmission mode.

The light source unit 61 is provided with a light source 7c of white or blue, a light source 7a of white or red, a light source 7b of white or green, and dichroic mirrors 10e, 10f and 10g for receiving light emitted from respective light sources to color-separating it into corresponding colors, namely, blue light (B), red light (R) and green light (G) upon reflection. Light beams reflected on respective dichroic mirrors 10e, 10f and 10g are aligned to each other, to enter a dielectric beam splitter 51.

The scanner body 1 is equipped with dielectric beam splitter 51, a total reflection mirror 10j and an optical unit for reflection mode. Dielectric beam splitter 51 receives light beams of B, R and G, to cause, for example, a 50% reflection and a 50% transmission of them. The reflected light beams are incident on a reflective original 9, and the transmitted light beams are incident on a transmissive original 14.

The optical unit comprises a total reflection mirror 10a that reflects reflected light from a reflective colored original 9, a reflection pickup lens (equipped with an infrared-ray removal filter) 11a for condensing the reflected light, and a light receiving element 23a for reflection mode for converting the condensed reflected light into electric signals.

The unit 2 for transmission mode comprises a total reflection mirror 10c that reflects transmitted light from a transmissive colored original 14, a transmission pickup lens (equipped with an infrared-ray removal filter) 11b for condensing the transmitted light, and a light receiving element 23b for transmission mode for converting the condensed transmitted light into electric signals.

The optical unit and unit 2 for transmission mode move in synchronization with one another. Inside light source unit 61 of the pickup apparatus shown in Fig.18, light beams emitted from light sources 7c, 7a and 7b are reflected on dichroic mirrors 10e, 10f and 10g to make B, R and G light beams, and incident onto dielectric beam splitter 51 while keeping a common incident angle thereagainst. The beam splitter 51 reflects and transmits the incident light by 50% for each.

The reflection light from beam splitter 51 is used when a reflective original 9 is to be read. Specifically, in the optical unit, reflected light from reflective original 9 is reflected on mirror 10a so as to be image-formed through lens 11a on light receiving element 23a.

On the other hand, the transmission light from beam splitter 51 is used when a transmissive original 14 is to be read. Specifically, the transmitted light is deflected so as to be incident perpendicularly onto transmissive original 14. The transmitted light through transmissive original 14 is then condensed through lens 11b so as to be image-formed on light receiving element 23b in unit 2 for transmission mode.

The optical unit and unit 2 for transmission mode move in synchronization with one another, in order to read respective originals 9 and 14.

Accordingly, it becomes possible to pick up information of reflective and transmissive originals without necessity of a diffusing plate.

In this embodiment, with provision of plural dichroic mirrors 10e, 10f and 10g, light beams of B, R and G obtained from respective dichroic mirrors 10e, 10f and 10g are aligned with one another to be incident on a reflective original 9. Therefore, even if portions of the original 9 rise or come up, the color of original 9 can be reproduced properly.

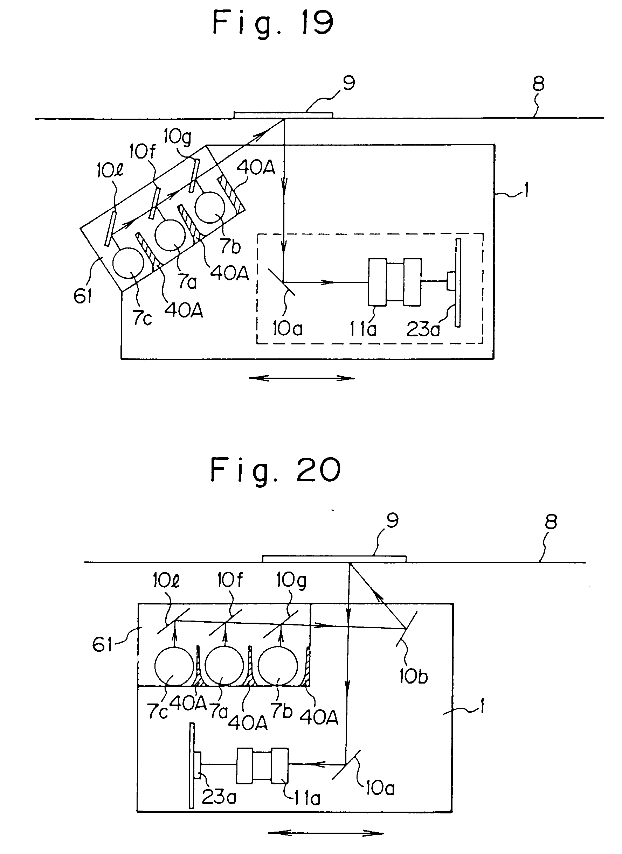

Next, Fig.19 shows a reflection pickup apparatus provided with another light source unit for reflection pickup mode in accordance with the present invention.

The pickup apparatus comprises a light source unit 61, a scanner body 1 and an optical unit.

The light source unit 61 has a nearly identical structure with the light source unit 61 shown in Fig.18, further comprising partitioning plates 40A. Other parts are identical, therefore like reference numerals are allotted for like parts.

The optical unit is identical with that shown in Fig.18, and the same reference numerals are allotted for respective parts.

In the pickup apparatus of Fig.19, light beam emitted from respective light sources 7c, 7a and 7b are deflected by a predetermined angle by corresponding dichroic mirrors 10e, 10f and 10g, to change their light paths. In this case, dichroic mirrors 10e, 10f and 10g are arranged making an angle of 45 degrees against the light beams, so that each beam having a separated color (B, R or G) is bent by a right angle.

Each of the deflected light beams is reflected on an original 9 and the reflected light is image-formed through a mirror 10a and the lens 11a on a light receiving element 23a.

In this arrangement, reflective original 9 is read while scanner body 1 moves.

Fig.20 further shows a variational example of the embodiment shown in Fig.19. In Fig.20, a reflection mirror 10b is further provided to bend the light path of the irradiating light from light source unit 61 onto original 9. With this arrangement, it is no more required to incline light source unit 61, so that scanner body 1 is reduced in size.

Next, with reference to the drawings, description will be made of a structural example of a color scanner for use in a reflective original pickup apparatus of the invention.

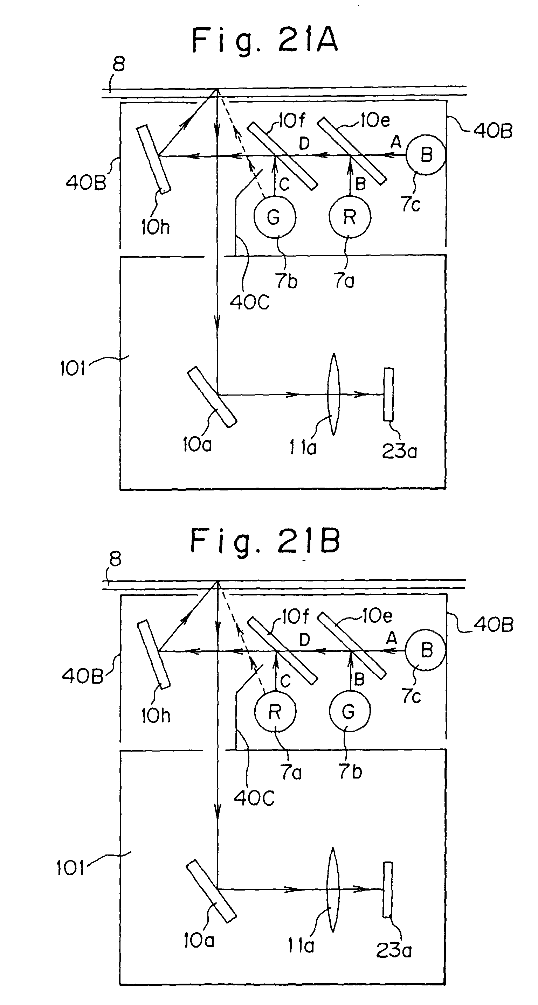

Fig.21A shows one example of those, that is, the color scanner comprises a light source unit including a plurality of light sources 7a, 7b and 7c and a plurality of mirrors 10e, 10f and 10g; and an optical unit including a mirror 10a, a lens 11a and a CCD 23a as a light receiving element. In this case, the main structural feature of the scanner resides in that the scanner is provided with a blocking members 40B and 40C for blocking out unnecessary light. In particular, the blocking member 40C effectively prevents an unnecessary light ray emitted from light source 7b (shown by a broken line) from reaching the pickup line for an object set on glass 8, for example, an achromatic solid body 50.

In the above case, light sources 7a, 7b and 7c use monochrome light sources of R(red), G(green) and B(blue), respectively, as shown in Fig.21, or may also use white light sources. Mirrors 10e, 10f may use half mirrors or dichroic mirrors. If half mirrors are used, the arrangement of mirrors should be made such that light beams A and D may be transmitted and light beams B and C may be reflected as shown in Fig.21A. On the other hand, when mirrors 10e and 10f are comprised of dichroic mirrors, mirror 10e is selected to transmit blue light beams and reflect red light beams, whereas mirror 10f is selected to transmit both blue and red light beams and reflect green light beams. Here, a mirror 10h uses a normal, total reflection mirror.

In this case, it is effective for preventing shadowy portion from coloring to have the darkest light source of the plural light sources, in the case of Fig.21A, green (G) light source 7b disposed at the nearest position from the object and the brightest light source, in the case of Fig.21A, blue (B) light source 7c positioned the furthest position therefrom.

In this connection, if the characteristics of mirrors 10e and 10f are changed such that mirror 10e transmits blue light beams but reflects green light beams whereas mirror 10f transmits blue and green light beams but reflects red light beams; it is possible to replace green light source 7b with red light source 7a as shown in Fig.21B, contrasting to the arrangement shown in Fig.21A.

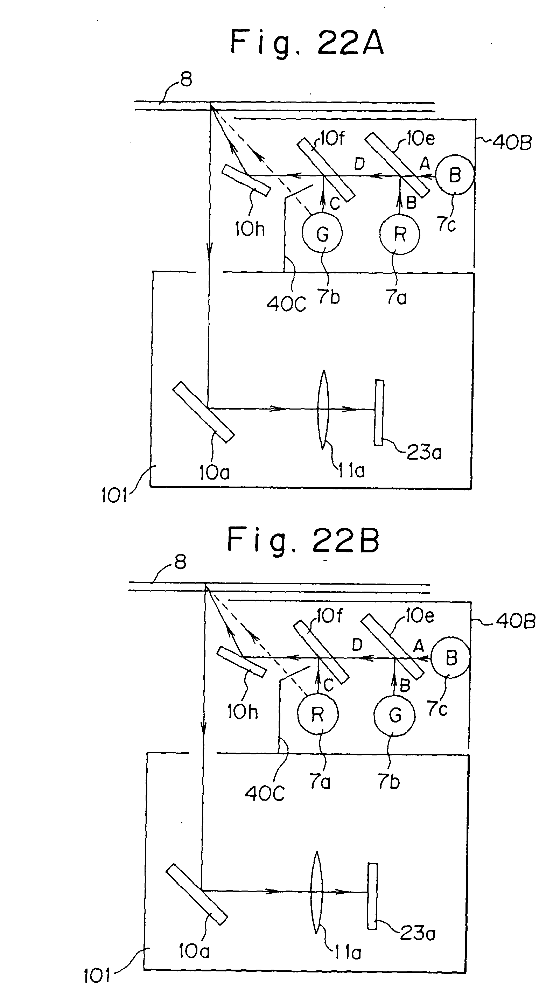

Fig.22A shows a variational example of the embodiment of Fig.21A, which has a basically identical structure with that shown in Fig.21A except in that the light reflected on and from an object (not shown) passes outside of the total reflection mirror 10h. Also in this case, it is possible to change the arrangement of the light sources as shown in Fig.22B, by changing the optical characteristics of mirrors 10e and 10f, in the same manner as above-described.

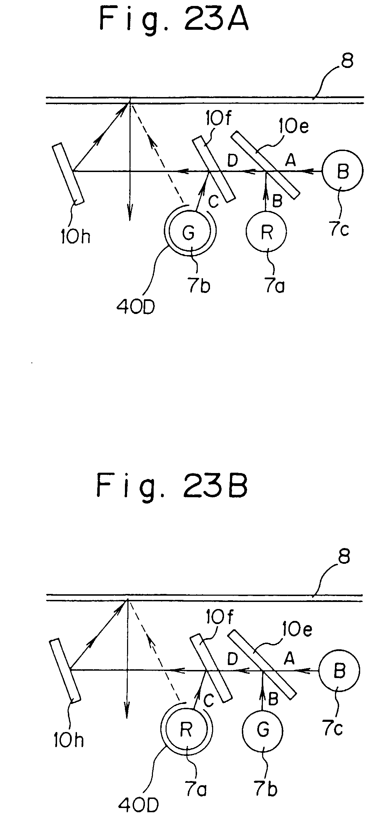

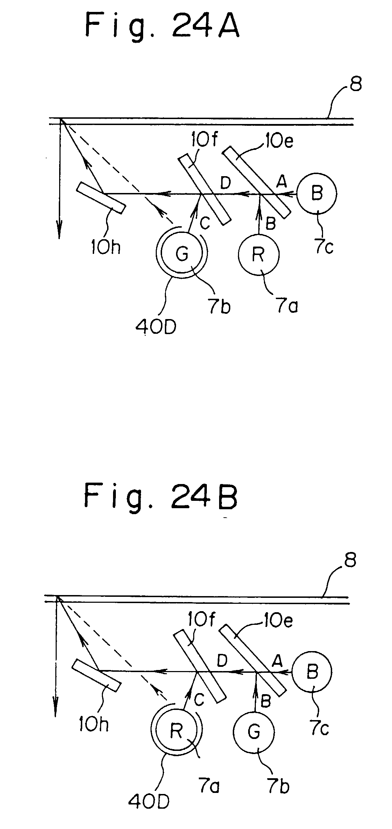

Figs. 23A and 24A show further variations of the embodiments shown in Fig.21A and Fig.22A. That is, the embodiments of Figs.23A and 24A have nearly similar structures to respective arrangements of light source units shown in Figs.21A and 22A. A main difference is that the nearest green (G) light source 7b from the pickup line is enclosed by a blocking member 40D in Figs.23A and 24A whereas the blocking member 40C is composed of a wall plate in Fig.21A and Fig.22A. Another difference is that the opening of the blocking member 40D is provided such that the light emitted from G light source 7b is directed away from the pickup line of the reflected light. As a result it is possible for the arrangements shown in Figs.23A and 24A, to block out the unnecessary light, shown by a broken line, emitted from light source 7b, more effectively than the case using the blocking member 40C.

Also in the cases shown in Figs.23A and 24A, it is possible to change the arrangement of the light sources as shown in Figs.23B and 24B, by changing the optical characteristics of mirrors 10e and 10f, in the same manner as in the cases of Figs.21A and 22A.

As has been apparent from the embodiments heretofore, according to the present invention, it is possible to achieve reading of both reflective and transmissive originals, without necessity of a diffusing plate. In addition, with provision of plural dichroic mirrors so as to supply a plurality of desired color light beams, if each of the desired color light beams are aligned in a direction or set in the same irradiating angle, to irradiate onto a reflective original, it is possible to improve the color reproduction performance for the reflective original even when portions of the original rise or come up. Still, it is also possible to prevent the shadow of an achromatic solid object from coloring in its reproduction.

## Claims

1. A scanner provided with means for reading both reflective and transmissive originals (9, 14), comprising:
a pair of CCD sensors (23a, 23b) one of which is for reflection mode to read reflective originals (9), and the other of which is for transmission mode to read transmissive originals (14), disposed respectively on a side of a light source (7), and on the opposite side thereto with an original table (8) therebetween;
a reflective/transmissive original mode discriminating means (49) including switching means (41) wherein, when said light source (7; 17, 18) is turned on, a judgement is made on whether or not light to be transmitted is blocked by a blocking member (15b; 4; 15; 19, 20) and based on the judged result, circuits of said CCD sensors (23a, 23b) are automatically changed over between one for transmission mode and the other for reflection mode;
a transmissive original pickup unit (2) which is disposed above a scanner body (1), wherein a pickup window (3) is equipped with said blocking member (15b; 4; 15; 19, 20) and a diffusing plate (103) in an attachable and detachable manner, said blocking member (15b; 4; 15; 19, 20) being for preventing light from entering said CCD sensor (23b) for transmission mode, and said diffusing plate (103) being for scattering incident light so as to introduce uniform light into said CCD sensor (23b) for transmission mode; and
detecting means (6) of said blocking member (15b; 4; 15; 19, 20) or said diffusing plate (103) for detecting the presence or absence of the attachment of said blocking member (15b; 4; 15; 19, 20) or said diffusing plate (103) and transmitting the obtained information to a main control section (25) of said scanner body (1).

2. A scanner according to claim 1, wherein said blocking member (15b; 4; 15; 19, 20) comprises an external light-blocking sheet or a light-blocking mat.

3. A scanner according to claims 1 or 2, comprising:
a lamp (17) for transmissive original to irradiate a transmissive original (14);
a blocking member (19, 20) that can be stretched out and wound up for reflecting light emitted from an illuminating lamp (18) of a scanner body (1); and
said both lamp (17) and blocking member (19, 20) being disposed above said scanner body (1).

4. A scanner according to any one of claims 1 to 3, comprising:
dichroic mirror means (10e, 10f, 10g) for creating desired color light by color-separating light emitted from said light source; and
a dielectric beam splitter (51) for reflecting and transmitting the created desired color light, so that the reflected light is irradiated on a reflective original (9) while the transmitted light is irradiated on a transmissive original (14).

5. A scanner according to claim 4, wherein
said dichroic mirror means (10e, 10f, 10g) comprises a plurality of dichroic mirrors each creating a light beam having a desired color, and said light beams (B, R, G) each having a desired color are aligned in a direction to irradiate a reflective original (9).

6. A method of reading reflective and transmissive originals, wherein use is made of a scanner according to any one of claims 1 to 5, comprising the steps of:
setting the scanner in a transmission pickup mode;
detecting the presence or absence of said diffusing plate (103), by moving an illuminating lamp by means of an optical unit that moves integrally with said illuminating lamp of said scanner body (1);
judging automatically based on the detected result whether the scanner should be operated in transmission mode or reflection mode; and thereafter,
scanning said original (9, 14) in the selected mode.

## Patentansprüche

1. Scanner, der mit einer Einrichtung zum Lesen sowohl reflektierender als auch transparenter Vorlagen (9, 14) versehen ist, mit:
- einem Paar CCD-Sensoren (23a, 23b), von denen der eine zum Lesen reflektierender Vorlagen (9) im Reflexionsmodus und der andere zum Lesen transparenter Vorlagen (14) im Transmissionsmodus dient, wobei sie auf einer Seite einer Lichtquelle (7) bzw. an der dazu gegenüberlegenden Seite angeordnet sind und wobei ein Vorlagentisch (8) dazwischenliegt;
- einer Modusunterscheidungseinrichtung (49) für reflektierende/transparente Vorlagen, mit einer Umschalteinrichtung (41), wobei in ihr, wenn die Lichtquelle (7; 17, 18) eingeschaltet wird, eine Beurteilung dahingehend erfolgt, ob durchzustrahlendes Licht durch ein Sperrelement (15b; 4; 15; 19, 20) ausgeblendet wird oder nicht, wobei Schaltungen der CCD-Sensoren (23a, 23b) auf Grundlage des Beurteilungsergebnisses automatisch zwischen einer solchen für den Transmissionsmodus und einer anderen für den Reflexionsmodus umgeschaltet werden;
- einer Bildaufnahmeeinheit (2) für transparente Vorlagen, die über einem Scannerkörper (1) angeordnet ist und in der ein Aufnahmefenster (3) mit dem Sperrelement (15b; 4; 15; 19, 20) und einer Streuplatte (103) auf anbringbare und wegnehmbare Weise versehen ist, wobei das Sperrelement (15b; 4; 15; 19, 20) dazu dient, dass Licht in den CCD-Sensor (23b) für den Transmissionsmodus eindringt, und die Streuplatte (103) dazu dient, einfallendes Licht so zu streuen, dass gleichmäßiges Licht in den CCD-Sensor (23b) für den Transmissionsmodus eingeleitet wird; und
- einer Erfassungseinrichtung (6) für das Sperrelement (15b; 4; 15; 19, 20) oder die Streuplatte (103) zum Erfassen des Vorhandenseins oder Fehlens der Anbringung des Sperrelements (15b; 4; 15; 19, 20) oder der Streuplatte (103) und zum Übertragen der erhaltenen Information an einen Hauptsteuerabschnitt (25) des Scannerkörpers (1).

2. Scanner nach Anspruch 1, bei dem das Sperrelement (15b; 4; 15; 19, 20) eine Sperrplatte gegen Außenlicht oder eine Lichtsperrmatte aufweist.

3. Scanner nach einem der Ansprüche 1 oder 2, mit:
- einer Lampe (17) für transparente Vorlagen, um eine transparente Vorlage (14) zu beleuchten;
- einem Sperrelement (19, 20), das in bezug auf reflektiertes Licht, wie es von einer Beleuchtungslampe (18) des Scannerkörpers (1) emittiert wird, gestreckt und aufgewickelt werden kann;
- wobei sowohl die Lampe (17) als auch das Sperrelement (19, 20) über dem Scannerkörper (1) angeordnet sind.

4. Scanner nach einem der Ansprüche 1 bis 3, mit:
- einer dichroitischen Spiegeleinrichtung (10e, 10f, 10g) zum Erzeugen gewünschten farbigen Lichts durch Farbauftrennung von von der Lichtquelle emittiertem Licht; und
- einem dielektrischen Strahlteiler (51) zum Reflektieren und Transmittieren der erzeugten, gewünschten, farbigen Lichtbündel in solcher Weise, dass das reflektierte Licht auf eine reflektierende Vorlage (9) gestrahlt wird, während das transmittierte Licht auf eine transparente Vorlage (14) gestrahlt wird.

5. Scanner nach Anspruch 4, bei dem die dichroitische Spiegeleinrichtung (10e, 10f, 10g) mehrere dichroitische Spiegel aufweist, von denen jeder einen Lichtstrahl mit gewünschter Farbe erzeugt, wobei diese Lichtstrahlen (B, R, G) mit jeweils gewünschter Farbe in einer Richtung zum Beleuchten einer reflektierenden Vorlage (9) ausgerichtet werden.

6. Verfahren zum Lesen reflektierender und transparenter Vorlagen, bei dem von einem Scanner gemäß einem der Ansprüche 1 bis 5 Gebrauch gemacht wird, mit den folgenden Schritten:
- Versetzen des Scanners in einen Transmissionsaufnahmemodus;
- Erkennen des Vorhandenseins oder Fehlens der Streuplatte (103) durch Verstellen einer Beleuchtungslampe durch eine optische Einheit, die sich gemeinsam mit der Beleuchtungslampe des Scannerkörpers (1) bewegt;
- automatisches Beurteilen, auf Grundlage des erfassten Ergebnisses, ob der Scanner im Transmissionsmodus oder im Reflexionsmodus betrieben werden soll; und, anschließend,
- Abrastern des Originals (9, 14) im ausgewählten Modus.

## Revendications

1. Scanneur de lecture optique équipé de moyens pour lire des originaux réfléchissants et transparents (9, 14), comprenant:
une paire de détecteurs à couplage de charges (23a, 23b) dont l'un est destiné à un mode de réflexion pour lire des originaux réfléchissants (9), et dont l'autre est destiné à un mode de transmission pour lire des originaux transparents (14), disposés respectivement d'un côté d'une source lumineuse (7), et du côté opposé à celle-ci avec une table d'original (8) située entre eux;
des moyens de discrimination de mode d'original réfléchissant/transparent (49) incluant des moyens de commutation (41) dans lesquels, lorsque ladite source lumineuse (7; 17, 18) est activée, une décision est prise concernant un blocage ou un non blocage par un élément de blocage (15b; 4; 15; 19, 20) d'une lumière à transmettre, et en fonction du résultat de décision, des circuits desdits détecteurs à couplage de charges (23a, 23b) sont automatiquement inversés entre l'un pour le mode de transmission et l'autre pour le mode de réflexion;
une unité de lecture d'original transparent (2) qui est disposée au-dessus d'un corps de scanneur (1), dans laquelle une fenêtre de lecture (3) est équipée dudit élément de blocage (15b; 4; 15; 19, 20) et d'une plaque de diffusion (103) d'une manière montée et d'une manière démontée, ledit élément de blocage (15b; 4; 15; 19, 20) étant prévu pour empêcher la lumière d'entrer dans ledit détecteur à couplage de charges (23b) pour le mode de transmission, et ladite plaque de diffusion (103) étant prévue pour diffuser la lumière incidente de façon à introduire une lumière uniforme dans ledit détecteur à couplage de charges (23b) pour le mode de transmission; et
des moyens de détection (6) dudit élément de blocage (15b; 4; 15; 19, 20) ou de ladite plaque de diffusion (103) pour détecter la présence ou l'absence du montage dudit élément de blocage (15b; 4; 15; 19, 20) ou de ladite plaque de diffusion (103) et transmettre l'information obtenue à une section de commande principale (25) dudit corps de scanneur (1).

2. Scanneur selon la revendication 1, dans lequel ledit élément de blocage (15b; 4; 15, 19, 20) comprend une feuille de blocage de lumière externe ou un tapis de blocage de lumière externe.

3. Scanneur selon la revendication 1 ou 2, comprenant:
une lampe (17) d'original transparent pour éclairer un original transparent (14);
un élément de blocage (19, 20) qui peut être tiré vers l'extérieur et enroulé pour réfléchir la lumière émise par une lampe d'éclairement (18) d'un corps de scanneur (1); et
ladite lampe (17) et ledit élément de blocage (19, 20) étant tous deux disposés au-dessus dudit corps de scanneur (1).

4. Scanneur selon l'une quelconque des revendications 1 à 3, comprenant:
des moyens à miroir dichroïque (10e, 10f, 10g) pour produire une lumière de couleur souhaitée en réalisant une séparation chromatique de la lumière émise par ladite source lumineuse; et
un séparateur diélectrique de faisceau (51) pour réfléchir et transmettre la lumière de couleur souhaitée produite, de façon que la lumière réfléchie est émise sur un original réfléchissant (9) tandis que la lumière transmise est émise sur un original transparent (14).

5. Scanneur selon la revendication 4, dans lequel
lesdits moyens à miroir dichroïque (10e, 10f, 10g) comprennent une pluralité de miroirs dichroïques produisant chacun un faisceau lumineux ayant une couleur souhaitée, et lesdits faisceaux lumineux (B, R, G) ayant chacun une couleur souhaitée sont alignés dans une direction pour éclairer un original réfléchissant (9).

6. Procédé de lecture d'originaux transparents et réfléchissants, dans lequel est employé un scanneur selon l'une quelconque des revendications 1 à 5, comprenant les étapes consistant à:
mettre le scanneur dans un mode de lecture de transmission;
détecter la présence ou l'absence de ladite plaque de diffusion (103), en déplaçant une lampe d'éclairement au moyen d'une unité optique qui se déplace comme un seul bloc avec ladite lampe d'éclairement dudit corps de scanneur (1);
décider automatiquement en fonction du résultat détecté si le scanneur doit être actionné en mode de transmission ou en mode de réflexion; et après,
analyser optiquement ledit original (9, 14) dans le mode sélectionné.
